## Europäisches Patentamt
## European Patent Office
## Office européen des brevets

(19)

(11) Veröffentlichungsnummer: **0 331 111**
**B1**

(12) **EUROPÄISCHE PATENTSCHRIFT**

(45) Veröffentlichungstag der Patentschrift: **23.01.91**

(51) Int. Cl.⁵: **B 01 J 2/16, B 01 J 8/38**

(21) Anmeldenummer: **89103506.5**

(22) Anmeldetag: **28.02.89**

(54) Wirbelschichtapparatur, insbesondere zum Granulieren pulverförmiger Substanz.

(30) Priorität: **01.03.88 DE 3806539**

(43) Veröffentlichungstag der Anmeldung:
**06.09.89 Patentblatt 89/36**

(45) Bekanntmachung des Hinweises auf die
Patenterteilung:
**23.01.91 Patentblatt 91/04**

(84) Benannte Vertragsstaaten:
**AT BE CH DE ES FR GB IT LI LU NL SE**

(56) Entgegenhaltungen:
**DE-A-2 321 418**
**GB-A-2 021 968**
**US-A-4 724 794**

(73) Patentinhaber: **Hüttlin, Herbert**
**Daimlerstrasse 7**
**D-7853 Steinen (DE)**

(72) Erfinder: **Hüttlin, Herbert**
**Daimlerstrasse 7**
**D-7853 Steinen (DE)**

(74) Vertreter: **Goetz, Rupert, Dipl.-Ing. et al**
**Wuesthoff & Wuesthoff Patent- und**
**Rechtsanwälte Schweigerstrasse 2**
**D-8000 München 90 (DE)**

Courier Press, Leamington Spa, England.

**Beschreibung**

Die Erfindung betrifft eine Wirbelschichtapparatur, insbes. zum Granulieren pulverförmiger Substanz, mit

einem Behälter, in dem ein Behandlungsraum für die Substanz, unterhalb davon eine Windkammer und zwischen beiden ein Siebboden angeordnet ist, und

einem Rotor mit einer kreisförmigen Rotorscheibe, der unterhalb des Siebbodens angeordnet ist, um eine aufrechte zentrale Achse drehantreibbar ist und mindestens eine in ungefähr radialer Richtung langgestreckte Öffnung aufweist, die einen Gasstrom von der Windkammer durch den Siebboden hindurch nach oben in den Behandlungsraum zuläßt. Eine gattüngsähnliche Wirbelschichtapparatur ohne Siebboden ist in der Parallelanmeldüng EP-A-0331112 (Prio 01.03.88) beschreiben.

Bei einer zu dieser Gattung gehörigen aus der US 3849900 bekannten Wirbelschichtapparatur, die zum Trocknen von Partikeln vorgesehen ist, besteht der Rotor aus einer senkrechten Welle mit einer flachen kreisförmigen Scheibe. Diese hat einen etwas größeren Durchmesser als der Siebboden und weist zwei oder mehr kreissektorförmige Öffnungen auf. Der Siebboden gehört zu einem schubladenartigen Kasten, der aus dem Behälter herausziehbar und in seiner Betriebsstellung durch aufblasbare Schlauchdichtungen gegen den Behälter abgedichtet ist. Eine dieser Schlauchdichtungen liegt zwischen einem den Siebboden umschließenden unteren Rahmenteil des Kastens und einem unterhalb davon im Behälter ausgebildeten Absatz. Erst unterhalb von diesem ist die Rotorscheibe angeordnet, die somit einen erheblichen Höhenabstand vom Siebboden hat. Im Betrieb dieser bekannten Wirbelschichtapparatur wird erhitzte, trockene Luft von der Windkammer durch den umlaufenden Rotor und durch den Siebboden hindurch in den Behandlungsraum geblasen, so daß eine darin enthaltene pulverförmige Substanz je nach Gestaltung der Rotorscheibe in einer oder mehreren diffus begrenzten Zonen des Behandlungsraums fluidisiert und getrocknet wird.

Eine andere, aus der DE 2932803 A1 bekannte Wirbelschichtapparatur hat einen Rotor mit einem im axialen Querschnitt U-förmigen Profil, das nach oben durch eine mit Luftaustrittsöffnungen versehene Blende teilweise abgedeckt ist. Der Rotor ist an einer Hohlwelle befestigt und über diese antreibbar sowie an die Druckseite eines Gebläses angeschlossen. Innerhalb der Hohlwelle erstreckt sich eine Flüssigkeitsleitung nach oben, die in einer unmittelbar über dem Siebboden zentral angeordneten ortsfesten Sprühdüse endet. Der Bereich rings um den Rotor unterhalb des Siebbodens ist als Saugkammer ausgebildet und an die Saugseite des Gebläses angeschlossen. Bei dieser bekannten Apparatur wird trockene Luft aus der Hohlwelle radial auswärts in das U-förmige Rotorprofil umgelenkt, um von dort aus nach oben, durch den Siebboden hindurch in den Behandlungsraum zu strömen und die darin enthaltene Substanz zu fluidisieren. In die fluidisierte Substanz wird durch die zentrale Düse Flüssigkeit eingesprüht, so daß je nach Beschaffenheit der Substanz und der Flüssigkeit beispielsweise ein Agglomeriergranulat entsteht oder die Partikel der schon granulatförmigen Substanz mit einer Umhüllung versehen werden. Die verbrauchte Luft strömt, wiederum durch den Siebboden hindurch, aus dem Behandlungsraum in die Saugkammer.

Ferner ist aus der DE 2551578 A1 eine Wirbelschichtapparatur bekannt, bei der ein Behandlungsraum nach unten durch einen dichten Boden und nach oben durch eine Filteranordnung begrenzt ist. Unmittelbar über dem Boden ist ein zweioder mehrflügeliger Rotor angeordnet, der durch eine Hohlwelle angetrieben und an die Druckseite eines Gebläses angeschlossen ist. Die einzelnen Flügel des Rotors sind mit in bezug auf die Drehrichtung nach hinten gerichteten Luftaustrittsöffnungen versehen. Bei einer Ausführungsform dieser bekannten Wirbelschichtapparatur ist im Behandlungsraum zentrisch über dem Rotor eine Flüssigkeitsdüse angeordnet. Bei einer anderen Ausführungsform sind Flüssigkeitsdüsen in die Flügel des Rotors derart eingebaut, daß Flüssigkeit gezielt in Zonen des Behandlungsraumes eingesprüht wird, in denen die Substanz durch aus dem Rotor austretende Luft fluidisiert ist.

Der Erfindung liegt die Aufgabe zugrunde, eine Wirbelschichtapparatur derart zu gestalten, daß sie, gemessen an den beschriebenen bekannten Apparaturen, mit geringerem Energie- und Zeitaufwand je Gewichtseinheit der zu verarbeitenden Substanzen auskommt und sich besonders zum Granulieren schwer fluidisierbarer Substanzen eignet.

Die Aufgabe ist erfindungsgemäß dadurch gelöst, daß

der Siebboden ungefähr radiale Lamellen aufweist, die in je einer mindestens annähernd senkrechten Ebene unmittelbar über der Rotorscheibe derart angeordnet sind, daß sie den Gasstrom in einem scharf begrenzten Sektor nach oben leiten, und

in jedem sektorförmigen, durch den Siebboden hindurchgetretenen Gasstrom, über dessen radiale Länge verteilt und mit diesem bei Drehung des Rotors mitrotierend, Düsen zum Besprühen der Substanz im Behandlungsraum angeordnet sind.

Die erfindungsgemäßen Lamellen bewirken eine Bündelung der Gasströme, die auch nach deren Eintritt in die zu behandelnde Substanz überraschend lange erhalten bleibt, so daß die Fluidisierung der Substanz im Gegensatz zu den beschriebenen bekannten Apparaturen nicht in diffus begrenzten Bereichen, sondern in scharf begrenzten Zonen stattfindet. In jeder dieser Zonen ist eine Düsengruppe in einem aufwärtsgerichteten Gasstrom angeordnet, der die zu behandelnde Substanz in lebhafte und doch gleichmäßige, schonende Bewegung versetzt, so daß die Substanz mit verhältnismäßig großen Mengen Flüssigkeit je Zeiteinheit besprüht werden und auch besonders rasch wieder getrocknet werden kann. Die Lamellen sind vorzugsweise genau radial angeordnet, doch können gewisse Abweichungen von einer genau radialen Richtung bei allen Lamellen zugelassen werden, vor allem dann, wenn die Längsrichtung der Öffnungen in gleicher Weise von einer genau radialen Richtung abweicht.

Bei einer bevorzugten Ausführungsform der Erfindung ist jeder Öffnung ein in der selben Richtung wie diese langgestreckter höheneinstellbarer Ventilkörper zugeordnet. Durch — vorzugsweise selbsttätige — Höheneinstellung der Ventilkörper läßt sich verhindern, daß bei ungleichmäßiger Verteilung oder Beschaffenheit der Substanz im Behandlungsraum eine von mehreren Öffnungen des Rotors von einem überproportional großen Anteil des gesamten zur Verfügung stehenden Gasstromes durchströmt wird.

Diese Ausführungsform ist vorzugsweise dadurch weitergebildet, daß

die bzw. jede Öffnung des Rotors von Seitenwänden begrenzt ist, die in je einer mindestens annähernd senkrechten Ebene angeordnet sind, und deren Höhe mindestens so groß ist wie ihr Abstand voneinander, und

die Ventilkörper unterhalb der zugehörigen Seitenwände zwischen zweinach oben konvergierenden Leitplatten aufgehängt sind.

Im Sinne einer scharfen Begrenzung des Luftstromes ist es zweckmäßig, daß die Lamellen eine Höhe haben, die mindestens so groß ist wie der größte Abstand der Lamellen voneinander.

In gleichem Sinne ist es vorteilhaft, wenn der Abstand zwischen benachbarten Lamellen kleiner ist als die Breite jeder Öffnung des Rotors, bezogen auf beliebige Stellen der Lamellen und der Öffnungen, die gleiche Abstände von der aufrechten Achse haben.

Ferner ist es zweckmäßig, wenn die Lamellen durch eine mit der Rotorscheibe gleichachsigen Ring miteinander verbunden sind, dessen Unterseite eine Laufbahn für mindestens eine am Rotor gelagerte Rolle bildet. Dadurch wird es möglich, die Rotorscheibe in sehr geringem axialen Abstand von den Lamellen anzuordnen, was ebenfalls dazu beiträgt, unerwünschte Wirbel in dem aufwärtsgerichteten Gasstrom zu vermeiden.

Der Rotor ist zweckmäßigerweise von einer zentralen Welle antreibbar, die sich durch den Siebboden hindurch nach oben erstreckt und oberhalb von diesem in jedem sektorförmigen Gasstrom einen radialen Arm trägt, an dem eine Gruppe Düsen angeordnet ist. Der Düsengruppe oder den Düsengruppen könnte jedoch auch ein gesonderter Antrieb zugeordnet sein, der mit dem Antrieb des Rotors synchronisiert ist.

Zweckmäßigerweise ist jeder Arm gegen die zugehörige Öffnung, aus der er angeströmt wird, bezogen auf die Drehrichtung des Rotors nach hinten versetzt.

Es ist ferner vorteilhaft, wenn jeder Arm ein tragflügelähnliches Profil hat und um eine eigene, mindestens annähernd radiale Achse dreheinstellbar ist. Dadurch läßt sich die Richtung, in der das Tragflügelprofil von der fluidisierten Substanz angeströmt wird, und die Richtung, in der die Düsen die fluidisierte Substanz besprühen, entsprechend der Beschaffenheit dieser Substanz verändern.

Schließlich ist es vorteilhaft, wenn an jedem Arm der Abstand der Düsen voneinander mit zunehmendem Abstand von der zentralen Achse abnimmt. Diese Maßnahme trägt dazu bei, daß die Substanz in allen Bereichen des Behandlungsraumes, unabhängig davon, ob sie mehr oder weniger weit von der zentralen Achse entfernt sind, im wesentlichen gleichmäßig besprüht wird.

Ein Ausführungsbeispiel der Erfindung wird im folgenden anhand schematischer Zeichnungen mit weiteren Einzelheiten beschrieben. Es zeigt:

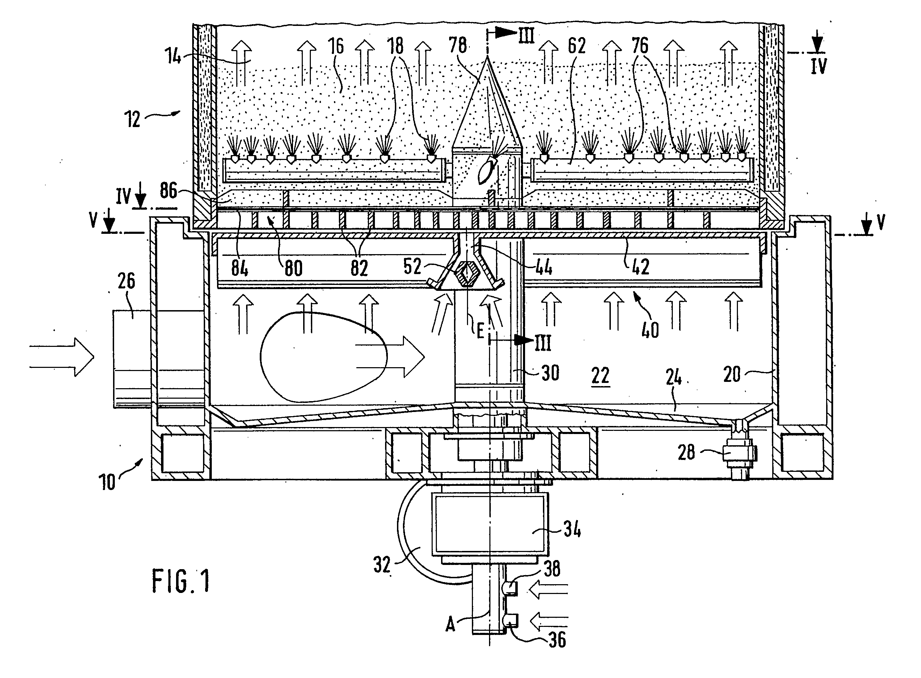

Fig. 1 eine teilweise als achsparalleler Schnitt gezeichnete Seitenansicht einer erfindungsgemäßen Wirbelschichtapparatur,

Fig. 2 einen vergrößerten Ausschnitt aus Fig. 1,

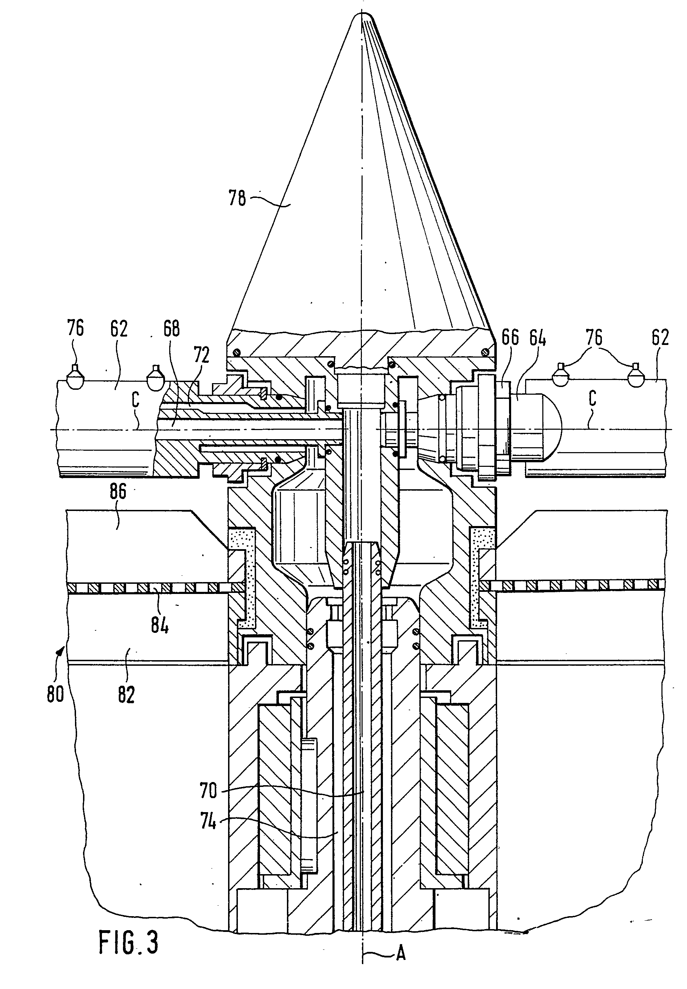

Fig. 3 den axialen Teilschnitt III—III in Fig. 1,

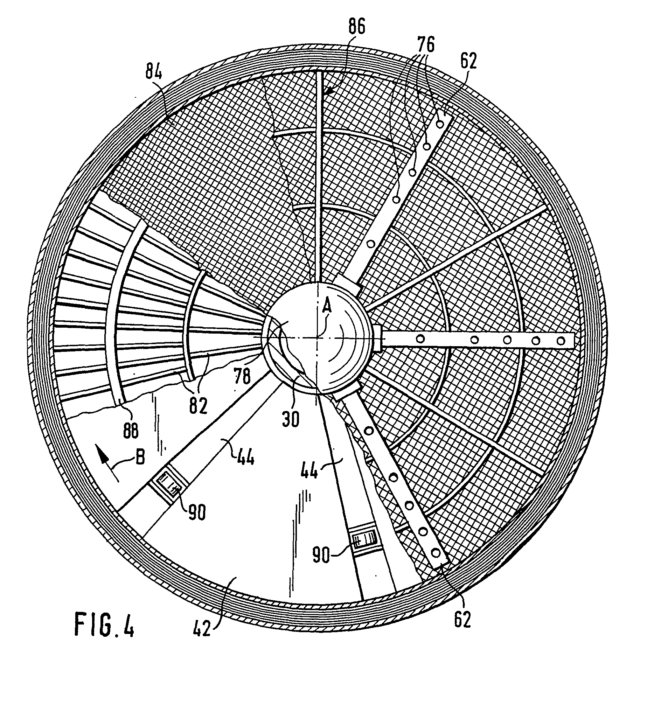

Fig. 4 den achsnormalen Schnitt IV—IV in Fig. 1.

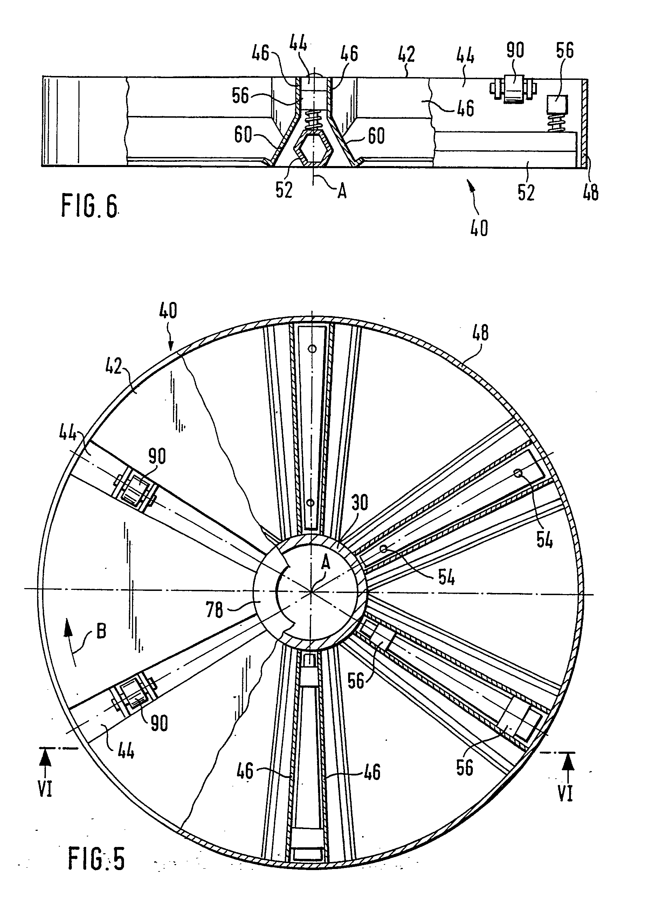

Fig. 5 den achsnormalen Teilschnitt V—V in Fig. 1 und

Fig. 6 den Schnitt VI—VI in Fig. 5.

Die dargestellte Wirbelschichtapparatur hat ein Untergestell 10, das einen Behälter 12 trägt. Der Behälter 12 enthält einen kreiszylindrischen Behandlungsraum 14, der im Betrieb teilweise mit einer zu behandelnden Substanz 16 gefüllt ist. Die Substanz 16 ist beispielsweise pulverförmig und soll in fluidisiertem Zustand mit Flüssigkeit 18 besprüht werden, um ein Granulat zu bilden. Der Behälter 12 ist von üblicher Bauart und deshalb nur in seinem hier interessierenden unteren Bereich dargestellt. Der Behandlungsraum 14 ist zweckmäßigerweise nach oben hin durch eine Filteranordnung begrenzt; Beispiele solcher Anordnungen sind aus den eingangs genannten Druckschriften US 3849900 und DE 2551578 bekannt.

Das Untergestell 10 hat einen kreiszylindrischen Mantel 20, der eine Windkammer 22 umschließt. Diese ist nach unten durch einen Boden 24 begrenzt und weist einen Zuluftstutzen 26 auf, durch den ein Gas, beispielsweise trockene warme Luft, zum Fluidisieren der Substanz 16 eingeleitet werden kann. Am Boden 24 ist ein Ablaßventil 28 angeordnet. Durch den Boden 24 erstreckt sich eine hohle Welle 30 mit senkrechter geometrischer Achse A hindurch. Die Welle 30 ist von einem Motor 32 über ein stufenlos einstellbares Getriebe 34 drehantreibbar. Am unteren Ende der hohlen Welle 30 ist ein Flüssigkeitseinlaß 36 sowie ein Drucklufteinlaß 38 angeordnet.

An der Welle 30 ist ein Rotor 40 befestigt, der als obere Begrenzung der Windkammer 22 eine kreisförmige Rotorscheibe 42 aufweist. Der Außendurchmesser der Rotorscheibe 42 ist annähernd so groß wie der Innendurchmesser des Mantels 20, und ist im dargestellten Beispiel etwas größer als der Innendurchmesser des Behälters 12, der unmittelbar über der Rotorscheibe 42 beginnt. Der Rotor 40 hat mehrere, im dargestellten Beispiel sechs, Öffnungen 44, die in gleichen Winkelabständen von im dargestellten Beispiel 60° gegeneinander versetzt sind und die Form je eines schmalen Kreisringsektors haben.

Jede der Öffnungen 44 ist durch ein paar senkrechte, radial nach außen divergierende Seitenwände 46 begrenzt, die sich von der hohlen Welle 30 bis zu einem kreiszylindrischen äußeren Kragen 48 erstrecken. Die Seitenwände 46 und der äußere Kragen 48 sind oben durch die Rotorscheibe 42 miteinander verbunden, die entsprechend den Öffnungen 44 ausgespart ist, so daß jede der Öffnungen einen senkrechten Gasstrom 50 von kreissektorförmigem Querschnitt aus der Windkammer 22 nach oben austreten läßt, wenn durch ein Gebläse, an das der Zuluftstutzen 26 angeschlossen ist, ein entsprechendes Druckgefälle von der Windkammer 22 zum Behandlungsraum 14 erzeugt wird.

Unterhalb jeder der Öffnungen 44 ist ein Ventilkörper 52 mit einem Paar Stangen 54 am Rotor 40 aufgehängt und nach oben verschiebbar geführt. Jeder der Ventilkörper 52 erstreckt sich in der gleichen radialen Richtung wie die zugehörige Öffnung 44 und hat wie diese einen sich mit zunehmendem Abstand von der Achse A vergrößernden Querschnitt. Die Stangen 54 sind an je einer schmalen Brücke 56, welche die zugehörige Öffnung 44 überbrückt, höheneinstellbar befestigt. Zu diesem Zweck ist ein oberer Abschnitt jeder Stange 54 mit einem Außengewinde und die zugehörige Brücke 56 mit einem Innengewinde versehen. Rings um jede Stange 54 ist eine Feder 58 angeordnet, die sich an der Unterseite der zugehörigen Brücke 56 abstützt und bestrebt ist, den Ventilkörper 52 gegen die Wirkung des erwähnten Druckgefälles in seiner durch die eingestellte Länge der Stangen 54 festgelegten unteren Endstellung zu halten.

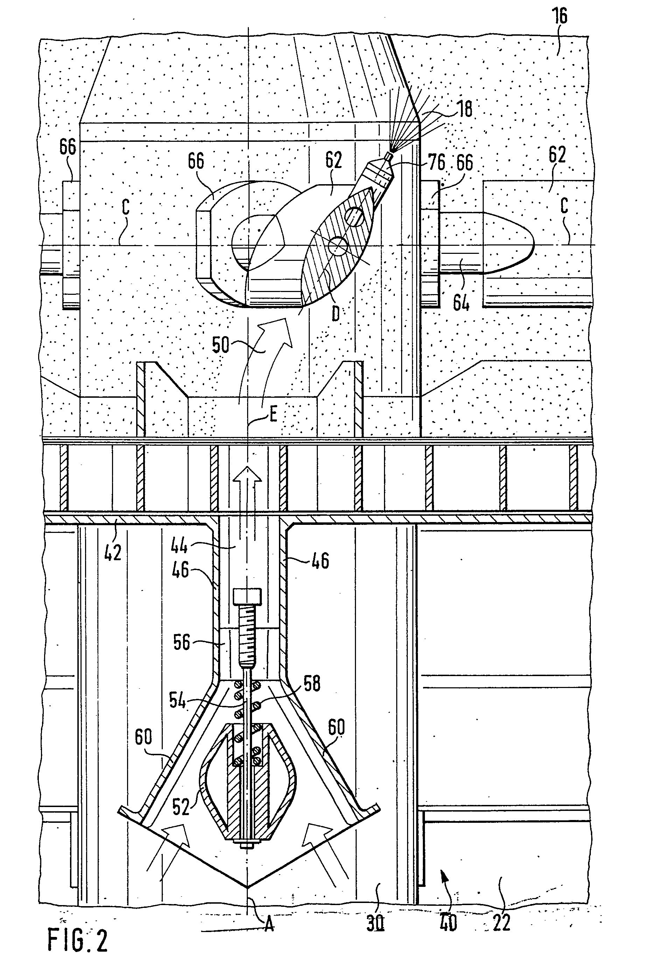

Jeder der Ventilkörper 52 ist genau mittig zwischen zwei Leitplatten 60 angeordnet, die sich vom zugehörigen Paar Seitenwände 46 nach unten erstrecken und im Querschnitt gemäß Fig. 2 nach unten divergieren. Zwischen jeder der Leitplatten 60 und dem zugehörigen Ventilkörper 52 bleibt ein radialer Schlitz frei, dessen Breite abnimmt, wenn der Ventilkörper 52 sich infolge eines übermäßigen Druckgefälles zwischen seiner Unterseite und seiner Oberseite gegen sein Eigengewicht und gegen den Druck der zugehörigen Federn 58 nach oben verschiebt.

In einem Abstand oberhalb des Rotors 40 sind an der Welle 30 mehrere Arme 62 befestigt, die sich oberhalb je einer der Öffnungen 44 radial nach außen bis nahe an die Innenwand des Behälters 12 erstrecken. Die Anzahl der Arme 62 stimmt mit der Anzahl der Öffnungen 44 überein; im dargestellten Beispiel sind also sechs Arme 62 in gleichen Abständen von 60° gegeneinander versetzt angeordnet. Bezogen auf die Betriebsdrehrichtung B des Rotors 40 ist jeder der Arme 62 gegen die zugehörige, unter ihm angeordnete Öffnung 44 geringfügig nach hinten versetzt.

Jeder der Arme 62 hat ein rohrförmiges Anschlußstück 64, das in eine radiale Bohrung der Welle 30 eingesetzt und mit einer Mutter 66 festgeschraubt ist. Nach Lösen seiner Mutter 66 läßt sich jeder Arm 62 um seine in bezug auf die Welle 30 radiale Achse C drehen. Das Profil des Arms 62 ist, wie vor allem Fig. 2 zeigt, dem Profil eines Tragflügels ähnlich; es hat eine Symmetrieebene D, welche die Ebene der Rotorscheibe 42 ungefähr in der Mittelebene E der zugehörigen Öffnung 44 schneidet.

Innerhalb jedes Arms 62 ist ein zentraler Kanal 68 ausgebildet, der über einen axialen Kanal 70 in der Welle 30 mit dem Flüssigkeitseinlaß 36 verbunden ist. Ein weiterer Kanal 72 in jedem Arm 62 ist über einen weiteren Kanal 74 in der Welle 30 mit dem Drucklufteinlaß 38 verbunden. An einem bezüglich der Drehrichtung B der Welle 30 schräg nach hinten oben weisenden Rand jedes Arms 62 sind mehrere Düsen 76 angeordnet, deren Achsen in der Symmetrieebene D des zugehörigen Arms 62 liegen und sich im rechten Winkel zu dessen Achse C erstrecken. Die Düsen 76 sind Zweistoffdüsen, in denen eine durch den Flüssigkeitseinlaß 38 zugeführte Flüssigkeit mit Druckluft versprüht wird. Die Abstände zwischen je zwei Düsen 76 nehmen mit zunehmendem Abstand von der Achse A ab, damit in alle Bereiche des Behandlungsraumes 14 ungefähr gleiche Flüssigkeitsmengen je Flächeneinheit eingesprüht werden.

Die Welle 30 hat ein kegelförmiges oberes Ende 78, dessen Spitze bis in den Bereich der normalen Obergrenze der im Behandlungsraum 14 fluidisierten Substanz 16 reicht.

Zwischen dem Rotor 40 und den Armen 62 ist ein Siebboden 80 angeordnet, der den Behandlungsraum 14 nach unten begrenzt, und durch den sich die Welle 30 hindurcherstreckt. Der Siebboden 80 hat als tragende Bauteile sternförmig angeordnete Lamellen 82, die in je einer die Achse A enthaltenden, also senkrechten, Ebene liegen. Sämtliche Lamellen 82 sind an der Innenwand des Behälters 12 befestigt; jede zweite Lamelle 82 reicht bis zur Welle 30; die übrigen Lamellen 82 enden etwas weiter radial außen. Die Lamellen 82 bestehen aus dünnem Blech und begrenzen schmale sektorförmige Zwischenräume, deren Breite in jedem beliebigen Abstand von der Achse A kleiner, vorzugsweise etwa halb so groß ist wie die Breite des Zwischenraums, den je zwei zusammengehörige Seitenwände 46 im gleichen Abstand von der Achse A zwischen sich freilassen. Die Höhe der Lamellen 82 ist mindestens so groß wie die größte in Umfangsrichtung gemessene Breite des Zwischenraums zwischen je zwei benachbarten Lamellen.

Auf den Lamellen 82 liegt ein Sieb 84, das genügend feinmaschig ist, um die Substanz 16 daran zu hindern, in die Windkammer 22 zu rieseln, wenn die Gasströmung zwischen dieser und dem Behandlungsraum 14 abgestellt ist. Auf dem Sieb 84 liegt ein Raster 86 aus radialen Stegen und kreisförmigen Reifen; dieses Raster 86 hindert das Sieb 84, sich nach oben zu bewegen, wenn zwischen der Windkammer 22 und dem Behandlungsraum 14 das für den Betrieb der Apparatur vorgesehene Druckgefälle herrscht. Damit unter dem Einfluß dieses Druckgefälles der Rotor 40 sich nicht nach oben bewegen und an den Lamellen 82 anstreifen kann, sind diese durch einen mit der Welle 30 gleichachsigen Ring 88 miteinander verbunden, dessen Unterseite eine Laufbahn für am Rotor 40 gelagerte Rollen 90 bildet.

**Patentansprüche**

1. Wirbelschichtapparatur, insbes. zum Granulieren pulverförmiger Substanz, mit

einem Behälter (12), in dem ein Behandlungsraum (14) für die Substanz (16), unterhalb davon eine Windkammer (22) und zwischen beiden ein Siebboden (80) angeordnet ist, und

einem Rotor (40) mit einer kreisförmigen Rotorscheibe (42), der unterhalb des Siebbodens (80) angeordnet ist, um eine aufrechte zentrale Achse (A) drehantreibbar ist und mindestens eine in ungefähr radialer Richtung langgestreckte Öffnung (44) aufweist, die einen Gasstrom (50) von der Windkammer (22) durch den Siebboden (80) hindurch nach oben in den Behandlungsraum (14) zuläßt, dadurch gekennzeichnet, daß

der Siebboden (80) ungefähr radiale Lamellen (82) aufweist, die in je einer mindestens annähernd senkrechten Ebene unmittelbar über der Rotorscheibe (42) derart angeordnet sind, daß sie den Gasstrom (50) in einem scharf begrenzten Sektor nach oben leiten, und

in jedem sektorförmigen, durch den Siebboden (80) hindurchgetretenen Gasstrom (50), über dessen radiale Länge verteilt und mit diesem bei Drehung des Rotors (40) mitrotierend, Düsen (76) zum Besprühen der Substanz (16) im Behandlungsraum (14) angeordnet sind.

2. Wirbelschichtapparatur nach Anspruch 1, dadurch gekennzeichnet, daß jeder Öffnung ein in der selben Richtung wie diese langgestreckter, höheneinstellbarer Ventilkörper (52) zugeordnet ist.

3. Wirbelschichtapparatur nach Anspruch 2, dadurch gekennzeichnet, daß die bzw. jede Öffnung (44) des Rotors (40) von Seitenwänden (46) begrenzt ist, die in je einer mindestens annähernd senkrechten Ebene angeordnet sind und deren Höhe mindestens so groß ist wie ihr Abstand voneinander, und die Ventilkörper (52) unterhalb der zugehörigen Seitenwände (46) zwischen zwei nach oben konvergierenden Leitplatten (60) aufgehängt sind.

4. Wirbelschichtapparatur nach einem der Ansprüche 1 bis 3, dadurch gekennzeichnet, daß die Lamellen (82) eine Höhe haben, die mindestens so groß ist wie der größte Abstand der Lamellen (82) voneinander.

5. Wirbelschichtapparatur nach einem der Ansprüche 1 bis 4, dadurch gekennzeichnet, daß der Abstand zwischen benachbarten Lamellen (82) kleiner ist als die Breite jeder Öffnung (44) des Rotors (40), bezogen auf beliebige Stellen der Lamellen (82) und der Öffnungen (44), die gleiche Abstände von der aufrechten Achse (A) haben.

6. Wirbelschichtapparatur nach einem der Ansprüche 1 bis 5, dadurch gekennzeichnet, daß die Lamellen (82) durch einen mit der Rotorscheibe (42) gleichachsigen Ring (88) miteinander verbunden sind, dessen Unterseite eine Laufbahn für mindestens eine am Rotor (40) gelagerte Rolle (90) bildet.

7. Wirbelschichtapparatur nach einem der Ansprüche 1 bis 6, dadurch gekennzeichnet, daß der Rotor (40) von einer zentralen Welle (30) antreibbar ist, die sich durch den Siebboden (80) hindurch nach oben erstreckt und oberhalb von diesem in jedem sektorförmigen Gasstrom (50) einen radialen Arm (62) trägt, an dem eine Gruppe Düsen (76) angeordnet ist.

8. Wirbelschichtapparatur nach Anspruch 7, dadurch gekennzeichnet, daß jeder Arm (62) gegen die zugehörige Öffnung (44), aus der er angeströmt wird, bezogen auf die Drehrichtung (B) des Rotors (40) nach hinten versetzt ist.

9. Wirbelschichtapparatur nach Anspruch 7 oder 8, dadurch gekennzeichnet, daß jeder Arm (62) ein tragflügelähnliches Profil hat und um eine eigene, mindestens annähernd radiale Achse (C) dreheinstellbar ist.

10. Wirbelschichtapparatur nach einem der Ansprüche 7 bis 9, dadurch gekennzeichnet, daß an jedem Arm (62) der Abstand der Düsen (76) voneinander mit zunehmendem Abstand von der zentralen Achse (A) abnimmt.

**Revendications**

1. Appareil à lit fluidisé, notamment pour la granulation d'une matière pulvérulente, comportant:

un récipient (12) où sont disposés un volume de traitement (14) pour la matière (16), en dessous de celui-ci une chambre à vent (22) et entre les deux un fond de filtrage (80), et

un rotor (40) pourvu d'un disque de rotor (42) de forme circulaire, qui est disposé en dessous du fond de filtrage (80), de façon à pouvoir être entraîné en rotation autour d'un axe central vertical (A) et qui comporte au moins un orifice de profil allongé (44) dans une direction sensiblement radiale pour laisser passer un écoulement de gaz (50) depuis la chambre à vent (22), à travers le fond de filtrage (80), vers le haut dans le volume de traitement (14), caractérisé en ce que:

le fond de filtrage (80) comporte des lamelles (82) orientées sensiblement radialement et qui sont disposées, chacune dans un plan au moins approximativement vertical, directement au-dessus du disque de rotor (42) de telle sorte qu'elles canalisent le courant de gaz (50) vers le haut dans un secteur nettement délimité, et

il est prévu, dans chaque courant de gaz (50) en forme de secteur qui traverse le fond de filtrage (80), des buses (76) réparties sur sa longueur radiale, tournant avec lui lors de la rotation du rotor (40) et servant à la pulvérisation de la matière (16) dans le volume de traitement (14).

2. Appareil à lit fluidisé selon la revendication 1, caractérisé en ce que chaque orifice est associé à un corps de soupape (52) de profil allongé dans la même direction que celui-ci et réglable en hauteur.

3. Appareil à lit fluidisé selon la revendication 2, caractérisé en ce que:

le ou chaque orifice (44) du rotor (40) est délimité par des parois latérales (46), qui sont chacune disposées dans un plan au moins approximativement vertical et dont la hauteur est au moins aussi grande que leur espacement mutuel, et les corps de soupape (52) sont suspendus en dessous des parois latérales associées (46) entre deux plaques directrices (60) convergeant vers le haut.

4. Appareil à lit fluidisé selon une des revendications 1 à 3, caractérisé en ce que les lamelles (82) ont une hauteur qui est au moins aussi grande que l'espacement maximal des lamelles (82) l'une de l'autre.

5. Appareil à lit fluidisé selon une des revendications 1 à 4, caractérisé en ce que l'espacement entre des lamelles adjacentes (82) est plus petit que la largeur de chaque orifice (44) du rotor (40), pour des positions quelconques des lamelles (82) et des orifices (44) qui ont des espacements identiques par rapport à l'axe vertical (A).

6. Appareil à lit fluidisé selon une des revendications 1 à 5, caractérisé en ce que les lamelles (82) sont reliées entre elles par un anneau (88) de même axe que le disque de rotor (12) et dont le côté inférieur forme une voie de roulement pour au moins un rouleau (90) monté sur le rotor (40).

7. Appareil à lit fluidisé selon une des revendications 1 à 6, caractérisé en ce que le rotor (40) peut être entraîné par un arbre central (30), qui s'étend vers le haut à travers le fond de filtrage (80) et qui porte, au-dessus de celui-ci, dans chaque courant de gaz (50) en forme de secteur, un bras radial (62) sur lequel est disposé un groupe de buses (76).

8. Appareil à lit fluidisé selon la revendication 7, caractérisé en ce que chaque bras (62) est décalé vers l'arrière, en considérant le sens de rotation (B) du rotor (40), par rapport à l'orifice associé (44), par lequel il est soumis à une pulvérisation.

9. Appareil à lit fluidisé selon la revendication 7 ou 8, caractérisé en ce que chaque bras (62) a un profil analogue à une aile portante et est réglable angulairement autour d'un axe propre (C), orienté au moins approximativement radialement.

10. Appareil à lit fluidisé selon une des revendications 7 à 9, caractérisé en ce que, sur chaque bras (62), l'espacement mutuel des buses (76) diminue à mesure que l'espacement par rapport à l'axe central (A) augmente.

## Claims

1. Fluidized bed apparatus, in particular for granulation of pulverulent substance, comprising

a container (12) in which a treatment space (14) for the substance (16) is arranged, therebelow a wind chamber (22) and between the two a sieve bottom (80), and

a rotor (40) having a circular rotor disc (42) which is arranged beneath the sieve bottom (80), is rotatably drivable about an upright central axis (A) and comprises at least one opening (44) which is elongated in approximately radially direction and which permits a gas stream (50) from the wind chamber (22) through the sieve bottom (80) upwardly into the treatment space (14), characterized in that

the sieve bottom (80) comprises approximately radial blades (82) which are each arranged in an at least approximately vertical plane directly above the rotor disc (42) in such a manner that they conduct the gas stream (50) upwardly in a sharply defined sector and

in each sector-shaped gas stream (50) which has passed through the sieve bottom (80) distributed over the radial length thereof and rotating therewith on rotation of the rotor (40) nozzles (76) are arranged for spraying the substance (16) in the treatment space (14).

2. Fluidized bed apparatus according to claim 1, characterized in that each opening has associated therewith a vertically adjustable valve body (52) elongated in the same direction as said opening.

3. Fluidized bed apparatus according to claim 2, characterized in that the or each opening (44) of the rotor (40) is defined by side walls (46) which are arranged in an at least approximately vertical plane and the height of which is at least as great as their distance from each other and the valve bodies (52) are suspended beneath the associated side walls (46) between two upwardly converging guide plates (60).

4. Fluidized bed apparatus according to any one of claims 1 to 3, characterized in that the blades (82) have a height which is at least as great as the greatest distance of the blades (82) from each other.

5. Fluidized bed apparatus according to any one of claims 1 to 4, characterized in that the distance between adjacent blades (82) is smaller than the width of each opening (44) of the rotor (40) with respect to any points of the blades (82) and the openings (44) which are located equal distances from the upright axis (A).

6. Fluidized bed apparatus according to any one of claims 1 to 5, characterized in that the blades (82) are connected together by a ring (88) which is coaxial with the rotor disc (42) and the lower side of which forms a track for at least one roller (90) mounted on the rotor (40).

7. Fluidized bed apparatus according to any one of claims 1 to 6, characterized in that the rotor (40) is drivable by a central shaft (30) which extends upwardly through the sieve bottom (80) and above the latter in each sector-shaped gas stream (50) carries a radial arm (62) on which a group of nozzles (76) is arranged.

8. Fluidized bed apparatus according to claim 7, characterized in that each arm (62) is rearwardly offset seen in the direction of rotation (B) of the rotor (40) with respect to the associated opening (44) from which it is subjected to the flow.

9. Fluidized bed apparatus according to claims 7 or 8, characterized in that each arm (62) has an airfoil-like profile and is rotatably adjustable about its own at least approximately radial axis (C).

10. Fluidized bed apparatus according to any one of claims 7 to 9, characterized in that on each arm (62) the distance of the nozzles (76) from each other decreases with increasing distance from the central axis (A).

FIG.1

FIG.2

FIG.3

FIG.4

FIG.6

FIG.5

5